# EUROPÄISCHE PATENTSCHRIFT

(11) **EP 2 613 996 B1**
(45) Veröffentlichungstag und Bekanntmachung des Hinweises auf die Patenterteilung: **04.05.2016**
(21) Anmeldenummer: 11748277.8
(22) Anmeldetag: 19.08.2011
(51) Int. Cl.: B62D 65/18

(54) **VORRICHTUNG ZUM FÖRDERN VON FAHRZEUGKAROSSERIEN**
DEVICE FOR TRANSPORTING VEHICLE BODIES
DISPOSITIF DE TRANSPORT DE CARROSSERIES

(30) Priorität: 10.09.2010 DE 102010045013
(43) Veröffentlichungstag der Anmeldung: 17.07.2013
(73) Patentinhaber: Eisenmann SE, 71032 Böblingen (DE)
(72) Erfinder: ROBBIN, Jörg, 72119 Ammerbuch (DE); HENNIG, Thomas, 70565 Stuttgart (DE)
(74) Vertreter: Heinrich, Hanjo
(86) Internationale Anmeldenummer: PCT/EP2011/004178
(87) Internationale Veröffentlichungsnummer: WO 2012/031679

(56) Entgegenhaltungen:
- EP-A1- 1 557 378
- DE-C1- 4 292 932

## Beschreibung

Die Erfindung betrifft eine Vorrichtung zum Fördern von Fahrzeugkarosserien, an denen standardisierte Haltebauteile vorhanden sind, mit
a) wenigstens einem Endlos-Antriebsstrang, der ein Lasttrum und ein Leertrum ausbildet;
b) einer Führungseinrichtung für den wenigstens einen Endlos-Antriebsstrang, die ein erstes Umlenkelement und wenigstens ein zweites Umlenkelement umfasst, über welche der wenigstens eine Endlos-Antriebsstrang umläuft,
wobei
c) der wenigstens eine Endlos-Antriebsstrang eine Mehrzahl von Koppelgliedern mit sich führt, die derart angeordnet und eingerichtet sind, dass sie mit den an der Fahrzeugkarosserie vorhandenen standardisierten Haltebauteilen zusammenarbeiten können.

Derartige Fördervorrichtungen sind beispielsweise aus der DE 42 92 932 C1 bekannt und dienen in der Automobilindustrie dazu, Fahrzeugkarosserien zwischen und insbesondere auch in einzelnen Bearbeitungs- oder Behandlungsstationen zu fördern.

Üblicherweise sind die Fahrzeugkarosserien dabei auf jeweils einem so genannten Skid befestigt, welcher in der Regel zwei Auflagekufen umfasst, mit denen der Skid auf z.B. einem Rollenbahnförderer aufliegt. Heutige Fahrzeugkarosserien werden bereits mit Haltebauteilen hergestellt, die standardisiert und auf die Skidtechnik abgestimmt sind. Diese Haltebauteile der Fahrzeugkarosserien sind meist Haltebleche an deren Boden. Diese Haltebleche arbeiten mit entsprechend angepassten Verriegelungselementen an den Skids zusammen, die ebenfalls an und für sich bekannt sind und über welche eine Fahrzeugkarosserie an einem Skid befestigt wird.

Um den Skid anzutreiben, ist dieser mit dem Endlos-Antriebsstrang gekoppelt, der beispielsweise als Förderkette ausgebildet sein kann und deren Lasttrum entsprechend parallel neben dem Rollenbahnförderer verläuft. Bei einer Variante kann der Skid auch mit seinen Auflagekufen auf jeweils einem Endlos-Antriebsstrang, also beispielsweise auf jeweils einer Förderkette, aufliegen.

In den einzelnen Behandlungsstationen erfährt ein solcher Skid zumeist die gleiche Behandlung, wie die auf ihm befestigte Fahrzeugkarosserie. Wenn eine Fahrzeugkarosserie auf einem Skid beispielsweise durch einen Trockner geführt wird, wird mit jeder Fahrzeugkarosserie jedes Mal auch der zugehörige Skid aufgeheizt, um ihn danach wieder mit der Fahrzeugkarosserie abzukühlen. Hierdurch wird bei jedem Trockenvorgang ein beträchtlicher Energieanteil zum Aufheizen und Abkühlen des Skids verbraucht.

In Behandlungszonen, in denen der Skid keine unmittelbare Behandlung erfährt, muss dieser dennoch mit der Fahrzeugkarosserie mitgeführt werden. Die zu fördernde Gesamtmasse von Fahrzeugkarosserie und Skid ist damit beträchtlich höher als die Masse einer Fahrzeugkarosserie allein. Beispielsweise wird eine Fahrzeugkarosserie mit einem Gewicht von etwa 400 kg auf einem Skid gefördert, der etwa 150 kg wiegt. Da größere Massen bewegt werden müssen, muss für den Transport von Fahrzeugkarosserie und Skid auch mehr Energie aufgewendet werden als für eine Fahrzeugkarosserie alleine.

Insgesamt ist bei vom Markt her bekannten Fördervorrichtungen der eingangs genannten Art, die mit Skids zusammenarbeiten, die Gesamtenergiebilanz im Hinblick auf die zu behandelnden Fahrzeugkarosserien verschlechtert und die Gesamtbetriebskosten der Anlage somit erhöht.

Bei Fördervorrichtungen der eingangs genannten Art kann eine zu transportierende Fahrzeugkarosserie dagegen unmittelbar ohne eine ergänzende Tragstruktur wie beispielsweise einen Skid von der Vorrichtung gefördert werden. Die Fahrzeugkarosserie arbeitet direkt mit den vorhandenen Koppelgliedern zusammen und wird von diesen getragen, wenn die Fahrzeugkarosserie von der Fördervorrichtung gefördert wird.

Allerdings kann die Bauhöhe recht groß ausfallen.

Es ist daher Aufgabe der Erfindung, eine Vorrichtung der eingangs genannten Art zu schaffen, die diesen Gedanken Rechnung trägt.

Diese Aufgabe wird bei einer Vorrichtung der eingangs genannten Art dadurch gelöst, dass
d) die Koppelglieder um eine Achse verkippbar mit dem Endlos-Antriebsstrang verbunden;
e) Mittel vorhanden, die derart eingerichtet sind, dass die Koppelglieder von dem Lasttrum in einer Arbeitsstellung und von dem Leertrum in einer demgegenüber verkippten Ruhestellung mitgeführt werden, wobei die Mittel
   ea) eine Abkippeinrichtung an einem ersten Ende des Endlos-Antriebsstrangs umfassen, mittels welcher die Koppelglieder aus ihrer Arbeitsstellung in die Ruhestellung verkippt werden;
   eb) eine Aufstelleinrichtung an einem zweiten Ende des Endlos-Antriebsstranges umfassen, mittels welcher die Koppelglieder aus ihrer Ruhestellung in die Arbeitsstellung verkippt werden.

Wenn die Koppelglieder z.B. als beim Lasttrum nach oben ragende Auflagebolzen ausgebildet sind, können diese an den Umlenkelementen verkippt und von dem Leertrum in einer Ruhestellung mitgeführt werden, die weniger Bauhöhe erfordert. Dies ist vor allem wünschenswert, wenn das Lasttrum und das Leertrum des Endlos-Antriebsstrangs übereinander verlaufen.

Es ist besonders vorteilhaft, wenn wenigstens zwei Endlos-Antriebsstränge vorhanden sind, deren Lasttrums parallel zueinander verlaufen und mit den Koppelgliedern eine Förderebene, insbesondere eine horizontale Förderebene, vorgeben.

Dabei ist es günstig, wenn die Koppelglieder sich zumindest im Bereich des Lasttrums des Endlos-Antriebsstranges vertikal nach oben über den Endlos-Antriebsstrang hinaus erstrecken. So ist ein Sicherheitsabstand zwischen Antriebsstrang und Fahrzeugkarosserie gewahrt.

Die Koppelglieder können beispielsweise ähnlich zu den bekannten Verriegelungselementen ausgebildet sein, wie sie an Skids vorhanden sind. Zum Beispiel können die Koppelglieder vorteilhaft als Auflagebolzen ausgebildet sein.

Es ist besonders günstig, wenn die Kippachse der Koppelglieder im Betrieb der Vorrichtung horizontal und senkrecht zur Umlaufrichtung verläuft und die Abkippeinrichtung und die Aufstelleinrichtung jeweils Schienenelemente umfassen, durch welche die Koppelglieder zwangsgeführt die Kippbewegung durchführen. Auf diese Weise kann die Änderung der Stellung der Koppelglieder erfolgen, ohne dass hierzu zusätzliche Stellglieder erforderlich sind, die ihrerseits einen separaten Antrieb erfordern würden.

Die nachfolgend erläuterten Merkmale sind nicht von der vorliegenden Erfindung umfasst und dienen lediglich einer technischen Erläuterung:

Alternativ zur erfindungsgemäßen Kippmechanik können das erste und das zweite Umlenkelement um zueinander parallele Achsen verdrehbar gelagert sein, die in einem von 0° verschiedenen Winkel zu einer horizontalen Ebene verlaufen. Die erforderliche Bauhöhe wird dabei mehr und mehr verringert, je größer der Winkel gegenüber der horizontalen Bezugsebene wird.

Vorzugsweise verlaufen die Achsen des ersten und des zweiten Umlenkelements vertikal. Dann liegen das Lasttrum und das Leertrum des Endlos-Antriebsstranges nebeneinander in einer horizontalen Ebene.

In diesem Fall sind die Koppelglieder bevorzugt an der Oberseite des Endlos-Antriebsstrangs angebracht. So kann der Endlos-Antriebsstrang die Last am besten aufnehmen.

Wenn der Endlos-Antriebsstrang auf oder in einer Art Schiene läuft, müssen verhältnismäßig große Reibungskräfte überwunden werden. Daher ist der Endlos-Antriebsstrang bevorzugt auf seiner Unterseite durch mehrere mitgeführte Laufrollen abgestützt.

Im Hinblick auf die Lastaufnahme ist es besonders vorteilhaft, wenn jeweils eine Laufrolle gegenüber von einem Koppelglied an dem Endlos-Antriebsstrang angeordnet ist.

Nachstehend wird ein Ausführungsbeispiel der Erfindung anhand der Zeichnungen näher erläutert. In diesen zeigen:
- Figur 1: als Ausführungsbeispiel einen Tragkettenförderer mit verkippbaren Auflagebolzen in einer Seitenansicht, der zwei Antriebseinheiten mit jeweils einer Förderketten umfasst, die zwischen einem Antriebsende und einem Lagerende der jeweiligen Antriebseinheit umlaufen;
- Figur 2: eine der Figur 1 entsprechende Ansicht des Tragkettenförderers, wobei Seitenwangen eines in Figur 1 zu erkennenden Führungsprofils und eine Abdeckung des Antriebsendes weggelassen sind;
- Figur 3: in größerem Maßstab einen Schnitt des Tragkettenförderers entlang der Schnittlinie III-III in Figur 1;
- Figur 4: eine Ausschnittsvergrößerung des in Figur 2 gezeigten Antriebsendes der dort zu sehenden Antriebseinheit;
- Figur 5: eine Ausschnittsvergrößerung der in Figur 2 gezeigten Förderkette im Bereich der dort gezeigten vorderen Fahrzeugkarosserie;
- Figur 6: eine Ausschnittsvergrößerung des in Figur 2 gezeigten Lagerendes der dort zu sehenden Antriebseinheit;
- Figuren 7, 9 und 11: die Antriebsenden beider Antriebseinheiten des Tragkettenförderers in einer perspektivischen Ansicht, wobei drei Phasen eines Kippvorgangs von Auflagebolzen für eine Fahrzeugkarosserie gezeigt sind;
- Figuren 8, 10 und 12: den Figuren 7, 9 und 11 entsprechende Ansichten der Lagerenden beider Antriebseinheiten des Tragkettenförderers in einer perspektivischen Ansicht, wobei drei Phasen eines Aufstellvorgangs der Auflagebolzen gezeigt sind;
- Figur 13: lediglich als technische Erläuterung einen Tragkettenförderer mit nicht verkippbaren vertikalen Auflagebolzen in einer perspektivischen Ansicht;
- Figur 14: eine der Figur 1 entsprechende Seitenansicht des Tragkettenförderers von Figur 13;
- Figur 15: eine Ansicht von oben auf den Tragkettenförderer der Figuren 13 und 14;
- Figur 16: eine der Figur 5 entsprechende Ausschnittsvergrößerung der in Figur 14 gezeigten Förderkette im Bereich der dort gezeigten vorderen Fahrzeugkarosserie, wobei ein Führungsprofil teilweise durchscheinend gezeigt ist;
- Figur 17: in größerem Maßstab einen Schnitt des Tragkettenförderers entlang der Schnittlinie XVII-XVII in Figur 14.

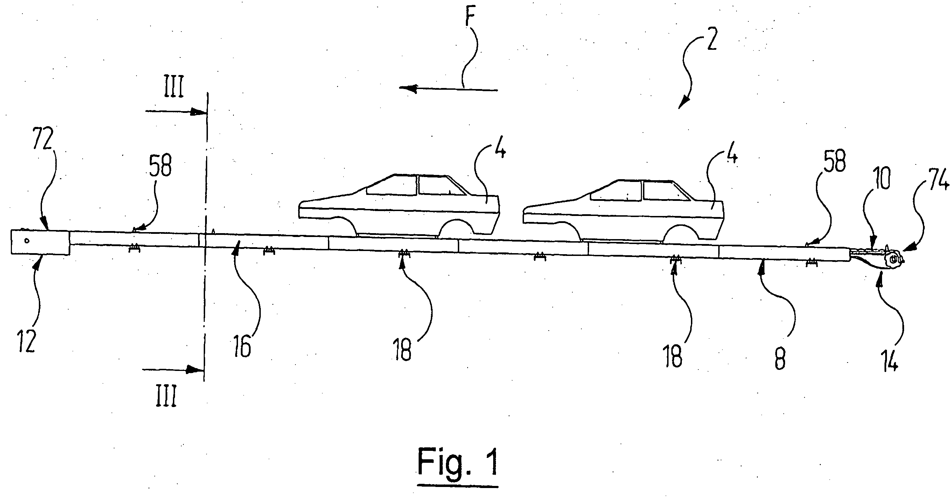

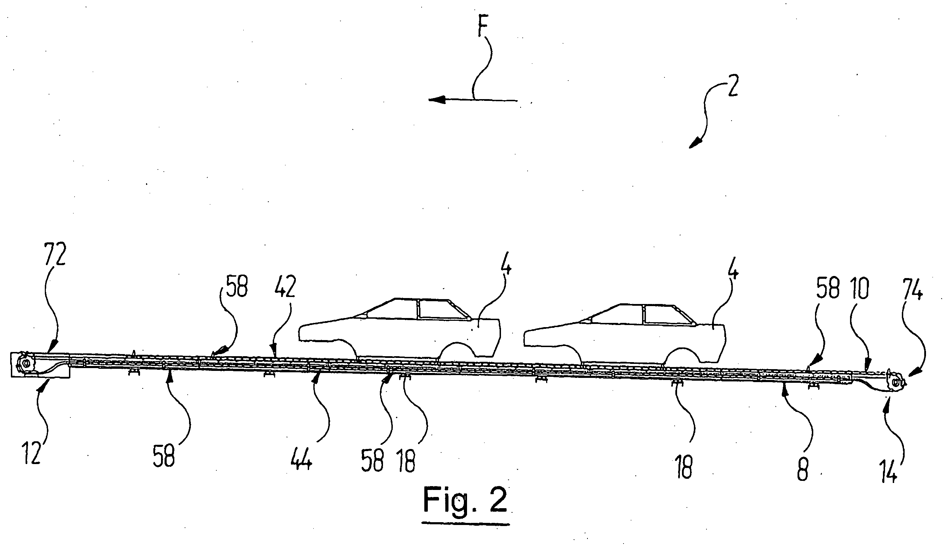

In den Figuren 1 bis 12 ist als Ausführungsbeispiel mit 2 insgesamt ein Tragkettenförderer bezeichnet, mit dessen Hilfe Fahrzeugkarosserien 4 beispielsweise durch eine Anlage zur Oberflächenbehandlung oder einzelne Behandlungszonen einer solchen gefördert werden sollen. Die Förderrichtung ist mit einem Pfeil F gekennzeichnet.

Der Tragkettenförderer 2 umfasst hierzu zwei parallel zueinander verlaufende Antriebseinheiten 6 und 8 für den Transport von Fahrzeugkarosserien 4. Die Antriebseinheiten 6, 8 sind bezogen auf eine parallel zu diesen verlaufende vertikale Ebene spiegelverkehrt aufgebaut, ansonsten jedoch baugleich und werden daher der Einfachheit halber nachstehend nur am Beispiel der Antriebseinheit 8 beschrieben, welche in Förderrichtung F links angeordnet ist. Das dazu Gesagte gilt sinngemäß entsprechend für die Antriebseinheit 6.

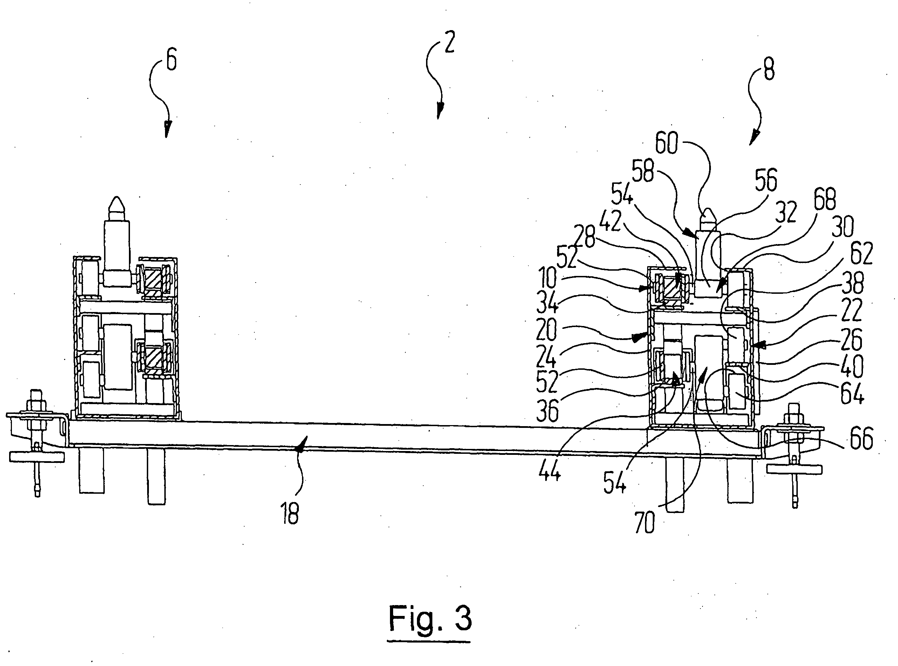

Die Antriebseinheit 8 führt einen Endlos-Antriebsstrang in Form einer endlosen Förderkette 10, welche zwischen einem Antriebsende 12 und einem Lagerende 14 der Antriebseinheit 8 umläuft. Die Antriebseinheit 8 umfasst hierzu ein Führungsprofil 16 für die Förderkette 10, welches über mehrere Stützstrukturen 18 am Boden befestigt ist, die auch das entsprechende Führungsprofil 16 der Antriebseinheit 8 tragen. Dies ist in Figur 3 zu erkennen.

Das Führungsprofil 16 erstreckt sich zwischen dem Antriebsende 12 und dem Lagerende 14 der Antriebseinheit 8 und umfasst eine erste Seitenwange 20 und eine zweite Seitenwange 22 mit jeweils einem planen vertikalen Abschnitt 24 bzw. 26, von denen am oberen Längsende jeweils ein oben liegender Flansch 28 bzw. 30 im rechten Winkel abgekantet ist. Diese beiden Flansche 28, 30 weisen aufeinander zu, wobei zwischen Ihnen ein Längsschlitz 32 verbleibt, welcher sich über die gesamte Länge des Führungsprofils 16 erstreckt.

An der Innenfläche des vertikalen Abschnitts 24 der ersten, in Figur 3 linken Seitenwange 20 sind zwei horizontale Zwischenböden 34, 36 angebracht, die in Richtung auf die zweite, in Figur 3 rechte Seitenwange 22 zu weisen. Auch die Innenfläche des vertikalen Abschnitts 26 der zweiten Seitenwange 22 trägt zwei horizontale Zwischenböden, diese sind mit 38 bzw. 40 bezeichnet und weisen in Richtung auf die linke Seitewange 20 zu.

Die beiden jeweils oberen Zwischenböden 34 und 38 der Seitenwangen 20, 22 liegen in einer gemeinsamen horizontalen Ebene. Von den beiden jeweils unteren Zwischenböden 36 und 40 ist der Zwischenboden 36 an der ersten Seitenwange 20 jedoch höher als der Zwischenboden 40 an der zweiten Seitenwange 22 angeordnet. Hierauf wird weiter unten nochmals eingegangen.

Auch zwischen den beiden oberen Zwischenböden 34 und 38 der Seitenwangen 20, 22 und zwischen den beiden unteren Zwischenböden 36 und 40 verbleibt jeweils ein Zwischenraum. Diese Zwischenräume überlappen in vertikaler Richtung mit dem oberen Längsschlitz 32 des Führungsprofils 16.

Die Förderkette 10 bietet ein Lasttrum 42 und ein Leertrum 44, wobei das Lasttrum 42 beim vorliegenden Ausführungsbeispiel auf dem oberen Zwischenboden 38 der zweiten Seitenwange 22 aufliegt, wogegen das Leertrum 44 auf dem unteren Zwischenboden 40 der zweiten Seitenwange 22 geführt wird. Das Lasttrum 42 und das Leertrum 44 der Förderkette 10 erstrecken sich zwischen einem Umlenkritzel 46 am Antriebsende 12 und einem Umlenkritzel 48 am Lagerende 14 der Antriebseinheit 8. Die Umlenkritzel 46 und 48 sind jeweils um eine horizontale Drehachse verdrehbar gelagert, so dass die Förderkette 10 jeweils in einer vertikalen Ebene umläuft. Das Umlenkritzel 46 am Antriebsende 12 kann in an und für sich bekannter Weise angetrieben werden und ist mit dem entsprechenden Umlenkritzel der Antriebseinheit 8 gekoppelt, so dass die Förderkette 10 der Antriebseinheit 8 und die Förderkette 10 der Antriebseinheit 6 synchronisiert umlaufen. Die beiden Lasttrum 42 der beiden Förderketten 10 der Antriebseinheiten 6 und 8 geben mit den Auflagebolzen 58 eine Förderebene vor, in der die Fahrzeugkarosserien 4 gefördert werden, die beim vorliegenden Ausführungsbeispiel horizontal verläuft.

Die Förderkette 10 umfasst eine Vielzahl von Kettengliedern 50, die in an und für sich bekannter Weise mittels frei drehbarer Achsbolzen 52 gelenkig miteinander verbunden sind. In den Figuren sind nicht alle Achsbolzen 52 mit einem Bezugszeichen versehen. In den Figuren 1, 2 sowie 4 und 6 sind jeweils einige Kettenglieder 50 am Antriebsende 12 bzw. am jeweiligen Lagerende 14 nicht gezeigt.

Bei besonderen Paaren aus benachbarten Kettengliedern 50a, 50b geht der jeweilige Achsbolzen 52 in der von der Antriebseinheit 8 weg weisenden Richtung in einen Achsstummel 54 über, der somit seitlich von der Förderkette 10 abragt.

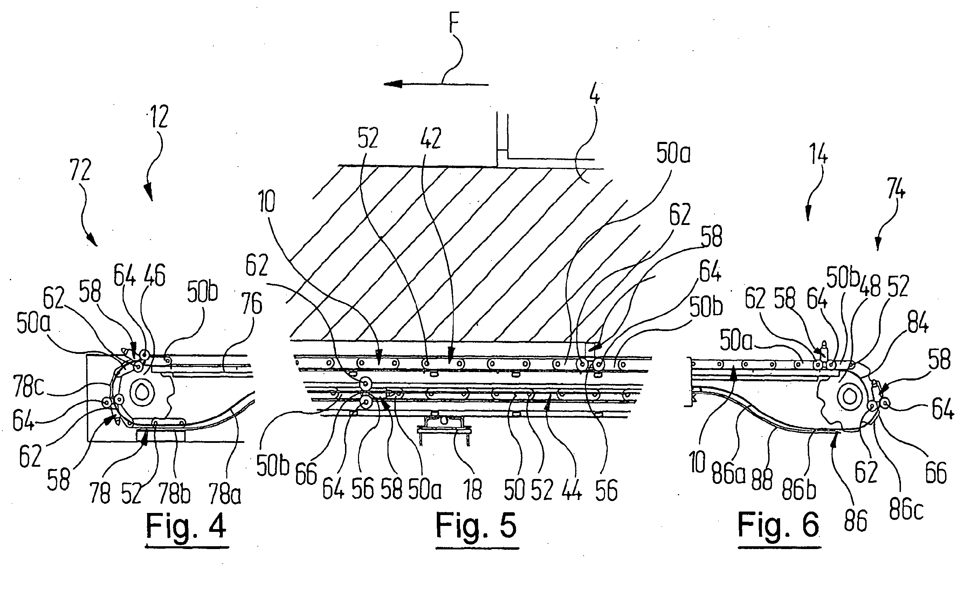

Der Achsstummel 54 ist an seinem von der Förderkette 10 abliegenden Ende drehfest mit einem Drehblock 56 verbunden. Dieser trägt als Koppelglied zur Fahrzeugkarosserie 4 einen Auflagebolzen 58, dessen Längsachse sich senkrecht zur Achse des Achsstummels 54 erstreckt. Am vom Achsstummel 54 abliegenden Ende des Auflagebolzens 58 ist ein Lagerkonus 60 vorhanden, der in seinen Abmessungen so an die zu fördernden Fahrzeugkarosserien 4 angepasst ist, dass er mit einem der standardisierten Haltebauteile der Fahrzeugkarosserie 4 zusammenarbeiten kann und insbesondere bereichsweise in eine hierzu vorgesehene Durchgangsöffnung eingreifen kann. Die Anzahl von Kettengliedern 50 zwischen zwei benachbarten und einer bestimmten Fahrzeugkarosserie 4 zugeordneten Achsstummeln 54 bzw. zwei benachbarten Auflagebolzen 58 ist stets gleich und so gewählt, dass zwei benachbarte Auflagebolzen 58 zu zwei entsprechenden Haltebauteilen der Fahrzeugkarosserie 4 passen. Der Abstand zwischen zwei solchen Paaren von Auflagebolzen 58 auf einer Förderkette 10 kann im Laufe der Lebensdauer der Förderkette 10 gegebenenfalls durch Entnahme von Kettengliedern verändert werden, um Längenänderungen der Förderkette 10 Rechnung zu tragen, die sich während deren Betrieb ergeben. In den Figuren 4 und 6 sind jeweils zwei Auflagebolzen 58 in geringerem Abstand gezeigt, um einen weiter unten erläuterten Abkipp- und Aufstellvorgang besser zu veranschaulichen.

Grundsätzlich sollte jeweils ein Auflagebolzen 58 jeder Förderkette 10 in ein Haltebauteil der Fahrzeugkarosserie 4 eingreifen. Jeder zweite Auflagebolzen 58 jeder Förderkette 10 kann anstelle des Lagerkonus 60 eine Auflageplatte tragen, auf welcher die Fahrzeugkarosserie 4 beispielsweise mit ihrem jeweiligen Schweller aufliegen kann. Auf diese Weise können Fertigungstoleranzen der Fahrzeugkarosserie 4 oder die oben angesprochenen Längenänderungen der Förderketten 10 ausgeglichen werden.

Auf seiner von der Förderkette 10 abliegenden Seite lagert der Drehblock 56 eine erste drehbare Rolle 62 und eine zweite drehbare Rolle 64, deren Drehachsen parallel zur Achse des zugehörigen Achsstummels 54 verlaufen und mit dieser in einer gemeinsamen Ebene liegen. Zwischen den beiden Rollen 62 und 64 verbleibt ein Zwischenraum 66.

Zwischen dem abgekanteten Flansch 30 und den oberen Zwischenböden 34 und 38 des Führungsprofils 16 ist ein oberer Führungskanal 68 für das Lasttrum 42 und unterhalb der beiden oberen Zwischenböden 34 und 38 ein unterer Führungskanal 70 für das Leertrum 44 der Förderkette 10 ausgebildet. Dies in Figur 3 zu erkennen.

Wie ebenfalls dort und in Figur 5 ersichtlich ist, läuft das Lasttrum 42 der Förderkette 10 derart durch den oberen Führungskanal 68, dass die Auflagebolzen 58 sich von dem Drehblock 56 vertikal nach oben durch den Längsschlitz 32 des Führungsprofils 16 hindurch erstrecken. Der jeweilige Lagerkonus 60 jedes Auflagebolzens 58 befindet sich dabei oben.

Hierbei gleiten die Kettenglieder 50 auf dem oberen Zwischenboden 36 der ersten Seitenwange 20 und die Rollen 62 und 64 am Drehblock 56 laufen auf dem oberen Zwischenboden 38 der zweiten Seitenwange 22 ab. Die erste Rolle 62 eilt der zweiten Rolle 64 dabei in Förderrichtung F voraus. Dadurch, dass die Rollen 62 uns 64 so in Laufrichtung hintereinander angeordnet sind, ist verhindert, dass der Auflagebolzen 58 beim Vortrieb der Förderkette 10 um die Achse des Achsstummels 54 verkippt.

In dem unteren Führungskanal 70 läuft das Leertrum 44 der Förderkette 10 dagegen in der Weise, dass die Auflagebolzen 58 im Vergleich zu ihrer vertikalen Stellung beim Lasttrum 42 um 90° verkippt sind und in die zur Förderrichtung F entgegengesetzte Richtung weisen. Ihre Längsachse liegt dabei weitgehend in einer horizontalen Ebene.

Die Kettenglieder 50 gleiten dabei auf dem unteren Zwischenboden 36 der ersten Seitenwange 20. Die erste Rolle 62 am Drehblock 56 läuft auf dem unteren Zwischenboden 40 der zweiten Seitenwange 22 ab, wogegen die zweite Rolle 64 frei unterhalb des unteren Zwischenbodens 40 von dem Drehblock 56 mitgeführt wird. Der Zwischenboden 40 ist dabei somit im Zwischenraum 66 zwischen den beiden Rollen 62, 64 am Drehblock 56 angeordnet.

Um beim Umlauf der Förderkette 10 eine entsprechende Stellung der Auflagebolzen 58 beim Lasttrum 42 und beim Leertrum 44 der Förderkette 10 herbeizuführen, sind am Antriebsende 12 der Antriebseinheit 8 eine Abkippeinrichtung 72 und am Lagerende 14 der Antriebseinheit 8 eine Aufstelleinrichtung 74 vorhanden.

Die Abkippeinrichtung 72 ist besonders gut in den Figuren 4, 7, 9 und 11 zu erkennen. Die Abkippeinrichtung 72 umfasst einen ersten Bodenendabschnitt 76 des oberen Zwischenbodens 38 an der zweiten Seitenwange 22, der sich geradlinig über die Seitenwange 22 des Führungsprofils 16 hinaus erstreckt. Darüber hinaus umfasst die Abkippeinrichtung 72 eine gekrümmte Führungsschiene 78, in welche der untere Zwischenboden 40 an der zweiten Seitenwange 22 übergeht. Hierbei mündet der untere Zwischenboden 40 zunächst in einen Schienenabschnitt 78a mit einem Gefälle in Förderrichtung F, der in einen wieder horizontalen Schienenabschnitt 78b übergeht. An diesen schließt sich ein gekrümmter Kreisbogen-Schienenabschnitt 78c an, welcher etwa einen Halbkreis entlang eines gedachten Kreises beschreibt, dessen Mittelachse koaxial zur Mittelachse des Umlenkritzels 46 ist.

Die Höhenlage des horizontalen Schienenabschnitts 78b, der Verlauf des Kreisbogen-Schienenabschnitts 78c und die Anordnung und Geometrie des Umlenkritzels 46 sind so aufeinander abgestimmt, das bei eingespannter Förderkette 10 der Kreisbogen-Schienenabschnitt 78c in etwa dem Umlauf der Achsstummel 54 um das Umlenkritzel 46 folgt.

Der Kreisbogen-Schienenabschnitt 78c endet am oberen Scheitelpunkt des ihm zu Grunde liegenden gedachten Kreises. Der erste Bodenendabschnitt 76 des oberen Zwischenbodens 38 an der zweiten Seitenwange 22 erstreckt sich nur so weit in Richtung auf das freie Ende des Kreisbogenabschnitts 78c der Führungsschiene 78, dass ein Abstand verbleibt, der etwas größer ist als der Durchmesser der Rollen 62 und 64 am Drehblock 56.

Die Abkippeinrichtung 72 umfasst ferner einen Laufboden 80 für die Förderkette 10, der in den unteren Zwischenboden 36 an der ersten Seitenwange 20 übergeht. Der Laufboden 80 weist in Förderrichtung F ebenfalls ein Gefälle auf; bezogen auf die normale Laufrichtung des Leertrums 44 der Förderkette 10 und damit entgegengesetzt zur Förderrichtung F weist der Laufboden 80 dementsprechend eine Steigung auf. Über den Laufboden 80 gelangen die Kettenglieder 50 der Förderkette 10, die von dem Umlenkritzel 46 am Antriebsende 12 der Antriebseinheit 8 ablaufen, zu dem unteren Zwischenboden 36 an der ersten Seitenwange 20 des Führungsprofils 16.

Die Aufstelleinrichtung 74 ist besonders gut in den Figuren 6, 8, 10 und 12 zu erkennen. Die Aufstelleinrichtung 74 umfasst einen zweiten Bodenendabschnitt 82 des oberen Zwischenbodens 38 an der zweiten Seitenwange 22, der sich entgegengesetzt zur Förderrichtung F geradlinig über die Seitenwange 22 hinaus erstreckt. Dieser trägt an seinem vom Zwischenboden 38 abliegenden Ende eine Leitschiene 84, welche nach unten gekrümmt ist und etwa einen Viertelkreis entlang eines gedachten Kreises beschreibt. Das freie Ende der Leitschiene 84 liegt etwa mittig zwischen der lichten Außenkontur und der Mittelachse des Umlenkritzels 48 und befindet sich etwa auf Höhe von dessen Mittelachse.

Die Aufstelleinrichtung 74 umfasst ferner eine gekrümmte Führungsschiene 86, in welche der untere Zwischenboden 40 an der zweiten Seitenwange 22 übergeht. Hierbei mündet der untere Zwischenboden 40 zunächst wieder in einen Schienenabschnitt 86a mit einem Gefälle, dieses weist jedoch in zur Förderrichtung F entgegengesetzte Richtung. Der Schienenabschnitt 86a geht dann in einen wieder horizontalen Schienenabschnitt 86b über. An diesen schließt sich wieder ein nach oben gekrümmter Kreisbogen-Schienenabschnitt 86c an, welcher einen Viertelkreis entlang eines gedachten Kreises beschreibt, dessen Mittelachse koaxial zur Mittelachse des Umlenkritzels 46 ist. Das freie Ende des Kreisbogen-Schienenabschnitts 86c liegt radial außen neben dem freien Ende der Leitschiene 84. Dabei verbleibt ein Abstand, der etwas größer ist als der Durchmesser der Rollen 62 und 64 am Drehblock 56.

Die Höhenlage des horizontalen Schienenabschnitts 86b, der Verlauf des Kreisbogen-Schienenabschnitt 86c und die Anordnung und Geometrie des Umlenkritzels 48 am Lagerende 14 sind so aufeinander abgestimmt, das bei eingespannter Förderkette 10 der Kreisbogen-Schienenabschnitt 86c in etwa dem Umlauf der Achsstummel 54 um das Umlenkritzel 48 folgt.

Die Aufstelleinrichtung 74 umfasst ferner einen Laufboden 88, der in den unteren Zwischenboden 36 an der ersten Seitenwange 20 übergeht und in Förderrichtung F eine Steigung aufweist. Über den Laufboden 88 werden die Kettenglieder 50 der Förderkette 10, die von dem Umlenkritzel 48 am Lagerende 14 der Antriebseinheit 8 ablaufen, zu dem unteren Zwischenboden 36 an der ersten Seitenwange 20 des Führungsprofils 16 geleitet.

Sowohl am Antriebsende 12 als auch am Lagerende 14 der Antriebseinheit 8 erstreckt sich der obere Zwischenboden 34 des Führungsprofils 16, auf welchem die Förderkette 10 abläuft, horizontal über die erste Seitenwange 20 hinaus und verläuft jeweils bis kurz vor das Umlenkritzel 46 bzw. vor das Umlenkritzel 48.

Der Tragkettenförderer 2 funktioniert nun wie folgt:

Eine Fahrzeugkarosserie 4 wird mittels hier nicht weiter interessierender Fördermittel am Lagerende 14 der Antriebseinheiten 6 und 8 auf Auflagebolzen 58 bzw. auf deren Lagerkonusse 60 des Lasttrums 42 der Förderkette 10 aufgesetzt, die vertikal nach oben aus den Führungsprofilen 16 herausragen. Die Fahrzeugkarosserie 4 kann unmittelbar und direkt auf die Auflagebolzen 58 aufgesetzt werden, ohne dass eine Tragstruktur wie z.B. ein Skid erforderlich ist.

Die zu tragende Last wird von den Auflagebolzen 58 über den Drehblock 56 an die Förderkette 10 und die Rollen 62, 64 übertragen und von den oberen Zwischenböden 34 und 38 des Führungsprofils 16 aufgenommen. Die Umlenkritzel 46 sind am jeweiligen Antriebsende 12 der Antriebseinheiten 6 und 8 angetrieben und die Fahrzeugkarosserie 4 wird in Förderrichtung F gefördert. Dabei gleitet das Lasttrum 42 jeder Förderkette 10 auf dem oberen Zwischenboden 34 und laufen die Rollen 62, 64 am Drehblock 56 auf dem oberen Zwischenboden 38 des jeweiligen Führungsprofils 16. Nachdem die Fahrzeugkarosserie 4 ihre vorbestimmte Wegstrecke gefördert wurde, wird sie wieder in an und für sich bekannter Weise von dem Tragkettenförderer 2 entnommen.

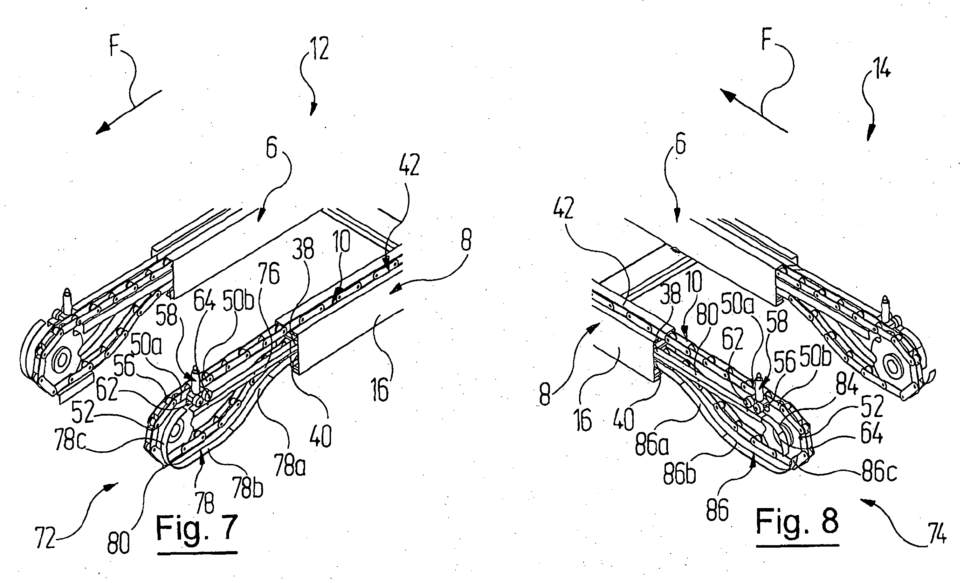

Beim Umlauf der Förderkette 10 gelangt ein Paar aus Kettengliedern 50a, 50b des Lasttrums 42, die mit einem Auflagebolzen 58 gekoppelt sind, zur Abkippeinrichtung 72. Dort laufen die Rollen 62, 64 zunächst auf dem Bodenendabschnitt 76 bis zu dessen freien Ende. Dies ist in Figur 7 zu erkennen.

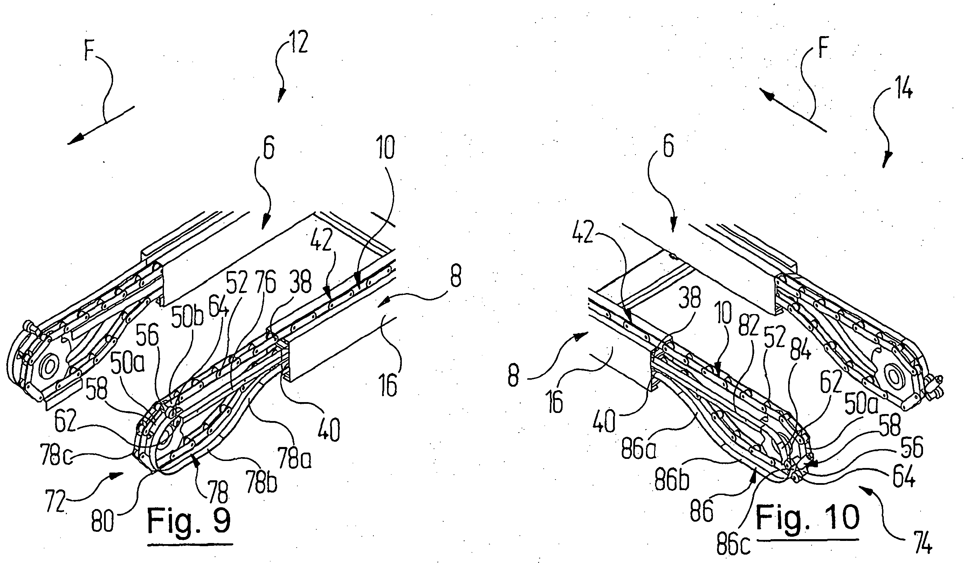

Wenn nun die in Förderrichtung F vorauseilende Rolle 62 am Drehblock 56 über das freie Ende des Bodenendabschnitts 76 hinaus bewegt wird, gelangt sie in den Zwischenraum zwischen dem Bodenendabschnitt 76 und dem Kreisbogen-Schienenabschnitt 78c der Führungsschiene 78. Die in Förderrichtung F nacheilende Rolle 64 am Drehblock 56 ist noch von dem Bodenendabschnitts 76 abgestützt, wodurch der Auflagebolzen 58 um die Achse des Achsbolzens 52 mit dem Achsstummel 54 in Förderrichtung F verkippt. Dabei fädelt das freie Ende des Kreisbogen-Schienenabschnitts 78c der Führungsschiene 78 in den Zwischenraum 66 zwischen den Rollen 62 und 64 am Drehblock 56 ein. Dies ist in Figur 9 zu erkennen.

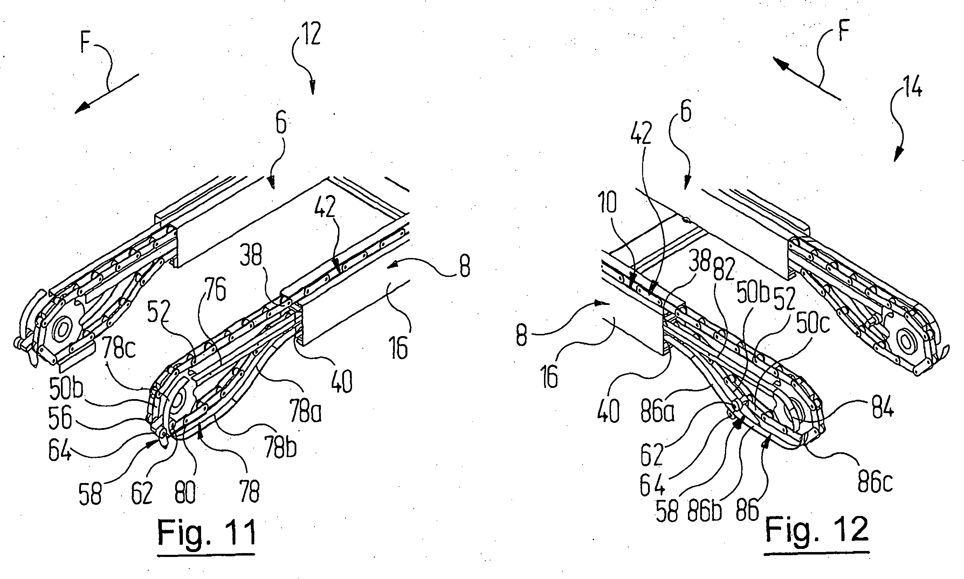

Beim weiteren Umlauf der Förderkette 10 ist der Drehblock 56 so durch die Führungsschiene 78 geführt, dass der Auflagebolzen 58 deren Verlauf folgt und dabei stets etwa tangential zur Führungsschiene 78 ausgerichtet ist. Dies ist in Figur 11 zu erkennen.

Schließlich gelangt der Auflagebolzen 58 in einer Ruhestellung, in der er horizontal ausgerichtet ist, in das Führungsprofil 16, wie es in den Figuren 3 und 5 zu sehen ist.

Wenn die Förderkette 10 weiter umläuft, gelangt der Auflagebolzen 58 schließlich zur Aufstelleinrichtung 74 am Lagerende 14 der Antriebseinheit 6 bzw. 8. Dort fährt die Rolle 62 am Drehblock 56 auf die Führungsschiene 86 auf, so dass diese zwischen den Rollen 62 uns 64 angeordnet ist. Dies ist in Figur 12 zu erkennen.

Der Auflagebolzen 58 folgt so dem Verlauf der Führungsschiene 86 und ist auch hier stets etwa tangential zu dieser ausgerichtet.

In Figur 10 ist eine Phase des Umlaufs der Förderkette 10 zu erkennen, in welcher der Drehblock 56 mit dem Auflagebolzen 58 in den Bereich zwischen den freien Enden des Kreisbogen-Schienenabschnitts 86c der Führungsschiene 86 und der Leitschiene 84 gelangt.

Hierbei läuft zunächst die erste Rolle 62 am Drehblock 56 auf die Leitschiene 84 auf. Wenn die zweite Rolle 64 am Drehblock 56 den Kontakt zum Kreisbogen-Schienenabschnitt 86c der Führungsschiene 86 verliert, kann der Auflagebolzen 58 so verkippen, dass schließlich beide Rollen 62, 64 am Drehblock 56 auf der Leitschiene 84 abrollen. Beim weiteren Umlauf der Förderkette 10 laufen die Rollen 62, 64 dann auf den zweiten Bodenendabschnitt 82 des oberen Zwischenbodens 38 an der zweiten Seitenwange 22 auf, so dass der Auflagebolzen 58 in vertikaler Richtung nach oben ragt, was seine Arbeitsstellung definiert.

Durch die Führungsschiene 78 der Abkippeinrichtung 72 sowie die Leitschiene 84 und die Führungsschiene 86 der Aufstelleinrichtung 74 führen die Auflagebolzen 58 somit zwangsgeführt die erforderliche Kippbewegung durch, um sie aus der Arbeitsstellung am Lasttrum 42 in die Ruhestellung am Leertrum 44 der Förderkette 10 - und umgekehrt - zu bringen.

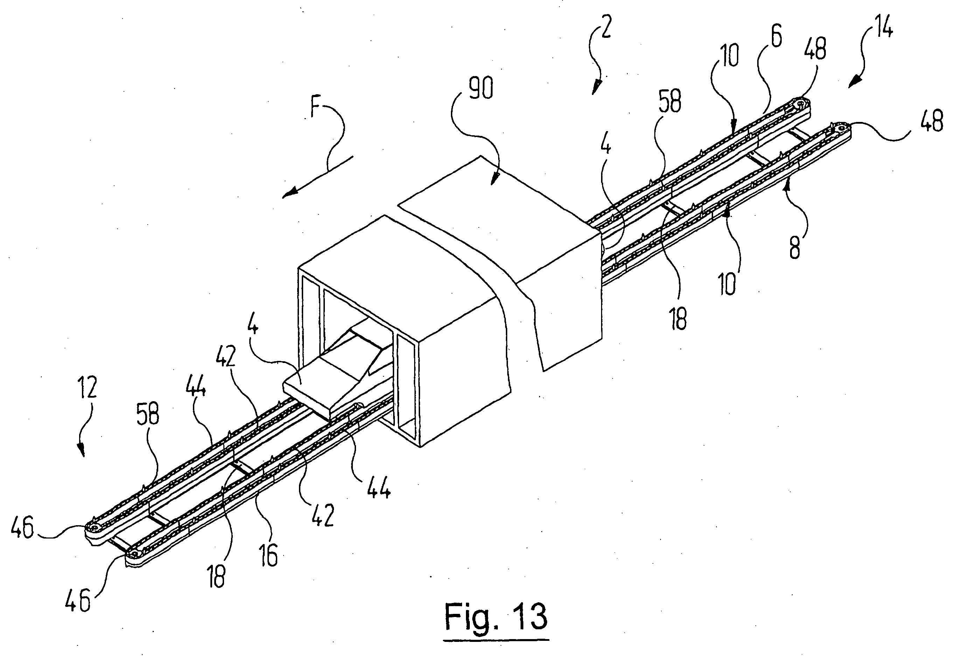

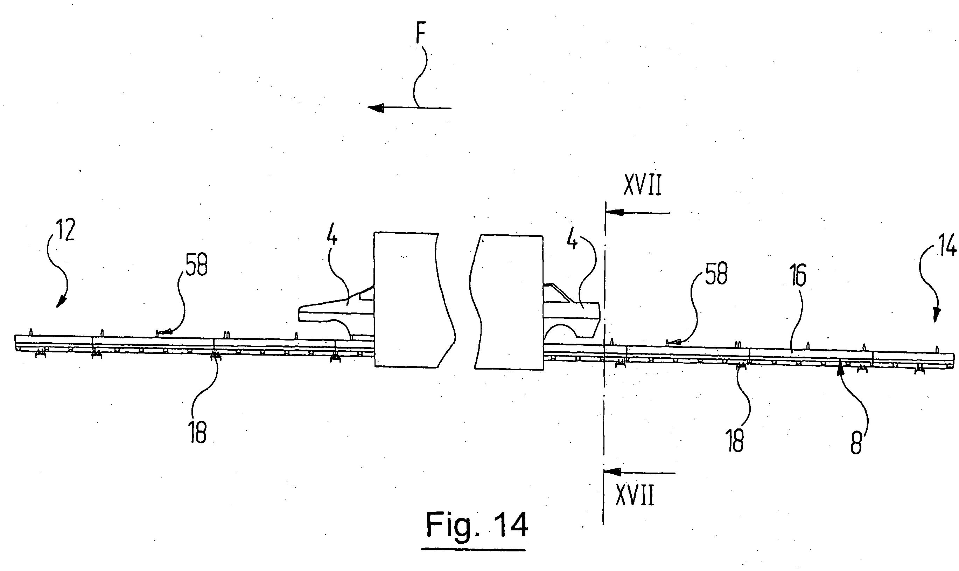

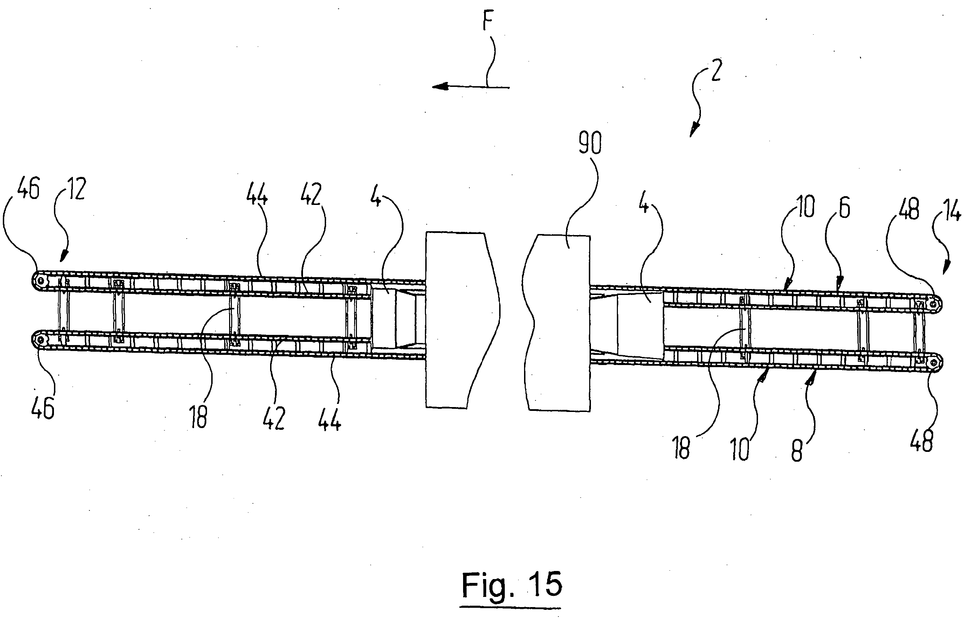

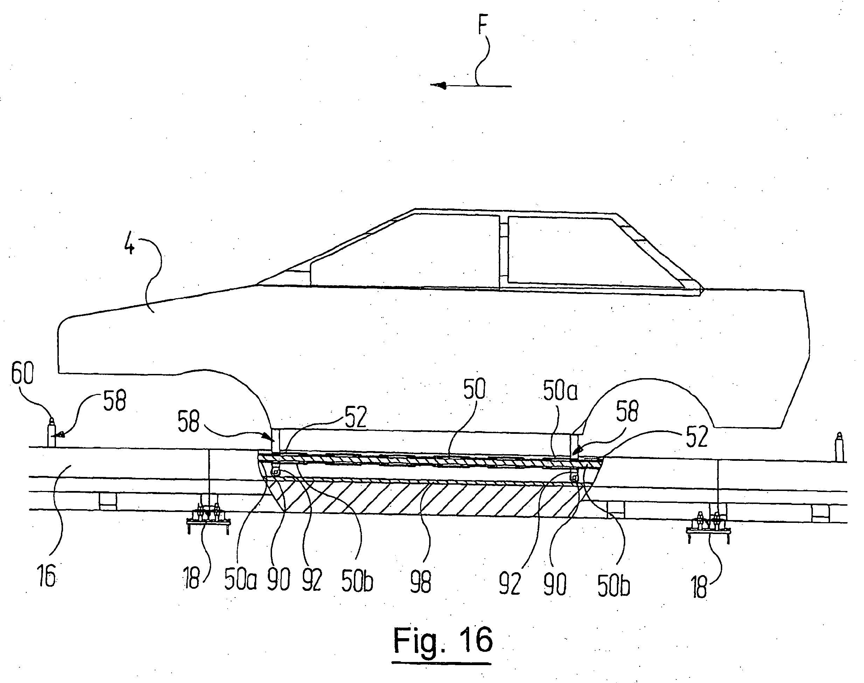

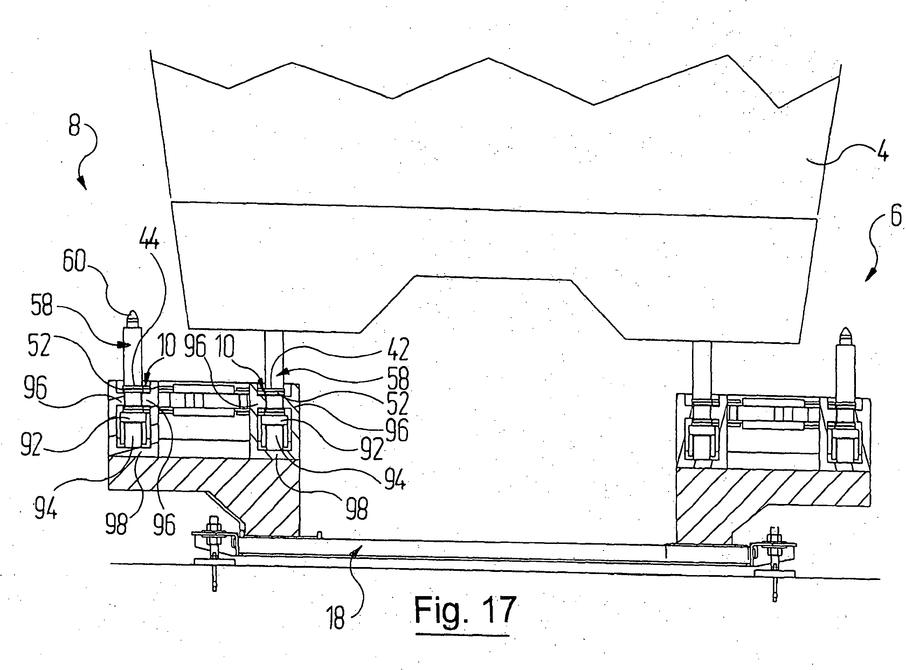

In den Figuren 13 bis 17 ist ein Tragkettenförderer 2' gezeigt, der lediglich als technische Erläuterung dienen soll. Komponenten, die denjenigen des Tragkettenförderers 2 nach den Figuren 1 bis 12 entsprechen, tragen dort dieselben Bezugszeichen. In den Figuren 13 bis 15 ist schematisch ein Trockner 90 gezeigt, der von einer Fahrzeugkarosserie 4 passiert werden soll.

Im Unterschied zum Tragkettenförderer 2 sind die Umlenkritzel 46 und 48 nicht um eine horizontale Drehachse, sondern um eine vertikale Drehachse verdrehbar gelagert, so dass die Förderketten 10 jeweils in einer horizontalen Ebene umlaufen. Die jeweiligen Lasttrums 42 der beiden Förderketten 10 der Antriebseinheiten 6, 8 verlaufen parallel zueinander und liegen einander gegenüber. Die jeweiligen Umlenkritzel 46 bzw. 48 der Antriebseinheiten 6 und 8 drehen daher in entgegengesetzte Drehrichtungen, wodurch die beiden Lasttrum 42 in die gleiche Förderrichtung F angetrieben werden.

Die Auflagebolzen 58 mit Lagerkonus 60 sind hier auf der Oberseite der Förderkette 10 starr mit einem jeweiligen Achsbolzen 52 zwischen zwei Kettenglieder 50a, 50b verbunden und verlaufen koaxial zu diesem. Anders ausgedrückt gehen beim Tragkettenförderer 2' die Achsbolzen 52 zwischen Kettengliedern 50a, 50b auf der Oberseite der Förderkette 10 in den Auflagebolzen 58 über.

Auf der von dem Auflagebolzen 58 abliegenden Unterseite der Förderkette 10 ist der jeweilige Achsbolzen 52 starr mit einem Rollenlager 92 verbunden, das eine lastaufnehmende Laufrolle 94 lagert, die um eine horizontale Achse verdrehbar ist. Die Laufrolle 94 wird so von der Förderkette 10 mitgeführt und stützt diese nach unten ab.

Das Führungsprofil 16 der Antriebseinheiten 6 und 8 umfasst für jedes Trum horizontale Seitenführungsschienen 96, welche sich zwischen den Umlenkritzeln 46 und 48 erstrecken und die Kettenglieder 150 flankieren. Die Laufrollen 94 rollen auf einer umlaufenden horizontalen Bodenlaufschiene 98 ab, die vertikal unterhalb der Förderkette 10 angeordnet ist und deren Verlauf folgt.

Durch die freie Drehbarkeit der Achsbolzen 52 richten sich die Laufrollen 94 durch die Bewegung der Förderkette 10 durch die Reibung an der Bodenlaufschiene 98 ohne weiteres Zutun aus, so dass auch das Umlenken der Förderkette 10 an den Umlenkritzeln 46 und 48 problemlos erfolgt.

Sowohl durch die Abkipp- und Aufstelleinrichtungen 72 bzw. 74 und die horizontale Ausrichtung der Auflagebolzen 58 des Leertrums 144 der Förderketten 10 bei dem Tragkettenförderer 2 als auch durch den horizontalen Umlauf der Förderketten 10 mit stets vertikal ausgerichteten Auflagebolzen 58 beim Tragkettenförderer 2' kann die erforderliche Bauhöhe der jeweiligen Antriebseinheiten 6 und 8 trotz der verhältnismäßig weit von der jeweiligen Förderkette 10 abragenden Auflagebolzen 58 verhältnismäßig klein gehalten werden.

Beim in den Figuren 13 bis 17 gezeigten Tragkettenförderer 2' läuft das jeweilige Lasttrum 42 jeder Fördereinheit 6, 8 innen und das zugehörige Leertrum 44 außen. Bei einer nicht eigens gezeigten Abwandlung ist der Abstand der Fördereinheiten 6 und 8 zueinander derart verringert, dass das dann jeweils außen liegende Trum der Förderketten 10 die Fahrzeugkarosserie 4 aufnimmt und das Leertrum dann innen unterhalb der Fahrzeugkarosserie 4 verläuft.

## Patentansprüche

1. Vorrichtung zum Fördern von Fahrzeugkarosserien, an denen standardisierte Haltebauteile vorhanden sind, mit
a) wenigstens einem Endlos-Antriebsstrang (10), der ein Lasttrum (42) und ein Leertrum (44) ausbildet;
b) einer Führungseinrichtung (6, 8) für den wenigstens einen Endlos-Antriebsstrang (10), die ein erstes Umlenkelement (46) und wenigstens ein zweites Umlenkelement (48) umfasst, über welche der wenigstens eine Endlos-Antriebsstrang 810) umläuft,
wobei
c) der wenigstens eine Endlos-Antriebsstrang (10) eine Mehrzahl von Koppelgliedern (58) mit sich führt, die derart angeordnet und eingerichtet sind, dass sie mit den an der Fahrzeugkarosserie (4) vorhandenen standardisierten Haltebauteilen zusammenarbeiten können,
**dadurch gekennzeichnet, dass**
d) die Koppelglieder (58) um eine Achse (52, 54) verkippbar mit dem Endlos-Antriebsstrang (10) verbunden sind;
e) Mittel (72, 74) vorhanden sind, die derart eingerichtet sind, dass die Koppelglieder (58) von dem Lasttrum (42) in einer Arbeitsstellung und von dem Leertrum (44) in einer demgegenüber verkippten Ruhestellung mitgeführt werden, wobei die Mittel (72, 74)
ea) eine Abkippeinrichtung (72) an einem ersten Ende (12) des Endlos-Antriebsstrangs (10) umfassen, mittels welcher die Koppelglieder (58) aus ihrer Arbeitsstellung in die Ruhestellung verkippt werden;
eb) eine Aufstelleinrichtung (74) an einem zweiten Ende (14) des Endlos-Antriebsstranges (10) umfassen, mittels welcher die Koppelglieder (58) aus ihrer Ruhestellung in die Arbeitsstellung verkippt werden.

2. Vorrichtung nach Anspruch 1; das wenigstens zwei Endlos-Antriebsstränge (10) vorhanden sind, deren Lasttrums (42) parallel zueinander verlaufen und mit den Koppelgliedern (58) eine Förderebene, insbesondere eine horizontale Förderebene, vorgeben.

3. Vorrichtung nach Anspruch 1 oder 2, **dadurch gekennzeichnet, dass** die Koppelglieder (58) sich zumindest im Bereich des Lasttrums (42) des Endlos-Antriebsstranges (10) vertikal nach oben über den Endlos-Antriebsstrang (10) hinaus erstrecken.

4. Vorrichtung nach einem der Ansprüche 1 bis 3, **dadurch gekennzeichnet, dass** die Koppelglieder (58) als Auflagebolzen (58) ausgebildet sind.

5. Vorrichtung nach einem der Ansprüche 1 bis 4, **dadurch gekennzeichnet, dass** die Kippachse (52, 54) der Koppelglieder (58) im Betrieb der Vorrichtung (2) horizontal und senkrecht zur Umlaufrichtung verläuft und die Abkippeinrichtung (72) und die Aufstelleinrichtung (74) Schienenelemente (76, 78; 82, 84, 86) umfassen, durch welche die Koppelglieder (58) zwangsgeführt die Kippbewegung durchführen.

## Claims

1. A device for conveying vehicle bodies, on which standardised holding components are present, having
a) at least one continuous drive train (10) which has a load-carrying strand (42) and a return strand (44);
b) a guide device (6, 8) for the at least one continuous drive train (10), which comprises a first deflection element (46) and at least one second deflection element (48) by way of which the at least one continuous drive train (10) revolves,
wherein
c) the at least one continuous drive train (10) carries a plurality of coupling elements (58) which are arranged and configured such that they can cooperate with the standardised holding components present on the vehicle body (4),
**characterised in that**
d) the coupling elements (58) are connected to the continuous drive train (10) such that they can tilt about an axis (52, 54);
e) means (72, 74) are present, which are configured such that the coupling elements (58) are carried along by the load-carrying strand (42) in an operating position and by the return strand (44) in an idle position which is tilted by comparison, wherein the means (72, 74)
ea) comprise a tilting device (72) at a first end (12) of the continuous drive train (10), by means of which the coupling elements (58) are tilted from their operating position into the idle position;
eb) comprise a righting device (74) at a second end (14) of the continuous drive train (10), by means of which the coupling elements (58) are tilted from their idle position into the operating position.

2. A device according to Claim 1, which at least two continuous drive trains (10) are present, whereof the load- carrying strands (42) extend parallel to one another and form a conveying plane, in particular a horizontal conveying plane, with the coupling elements (58).

3. A device according to Claim 1 or 2, **characterised in that** the coupling elements (58) extend vertically upwards beyond the continuous drive train (10), at least in the region of the load-carrying strand (42) of the continuous drive train (10).

4. A device according to one of Claims 1 to 3, **characterised in that** the coupling elements (58) are constructed as support pins (58).

5. A device according to one of the Claims 1 to 4, **characterised in that** the tilting axis (52, 54) of the coupling elements (58) extends horizontally and perpendicularly to the direction of revolution when the device (2) is in operation, and the tilting device(72) and the righting device (74) comprise rail elements (76, 78; 82, 84, 86) by means of which the coupling elements (58) carry out the tilting movement in positively driven manner.

## Revendications

1. Dispositif dévolu au convoyage de carrosseries de véhicules sur lesquelles des pièces structurelles de retenue normalisées sont présentes, comprenant
a) au moins un train d'entraînement (10) sans fin, donnant naissance à un brin de charge (42) et à un brin lâche (44) ;
b) un système de guidage (6, 8) qui est affecté audit train d'entraînement (10) sans fin, à présence minimale, et inclut un premier élément de renvoi (46) et au moins un second élément de renvoi (48) par l'intermédiaire desquels ledit train d'entraînement (10) sans fin, à présence minimale, accomplit une rotation en boucle,
sachant que
c) ledit train d'entraînement (10) sans fin, à présence minimale, entraîne une pluralité d'organes d'accouplement (58) disposés et agencés de façon telle qu'ils puissent coopérer avec les pièces structurelles de retenue normalisées, présentes sur la carrosserie (4) de véhicule,
caractérisé
d) par le fait que les organes d'accouplement (58) sont reliés au train d'entraînement (10) sans fin, avec faculté de basculement autour d'un axe (52, 54) ;
e) par la présence de moyens (72, 74) agencés de telle sorte que lesdits organes d'accouplement (58) soient entraînés dans une position de travail par le brin de charge (42) et, par le brin lâche (44), dans une position de repos basculée par rapport à cette dernière, lesdits moyens (72, 74)
ea) incluant, à une première extrémité (12) du train d'entraînement (10) sans fin, un système de basculement (72) à l'aide duquel les organes d'accouplement (58) sont amenés, par basculement, à la position de repos à partir de leur position de travail ;
eb) incluant, à une seconde extrémité (14) dudit train d'entraînement (10) sans fin, un système de redressement (74) à l'aide duquel lesdits organes d'accouplement (58) sont amenés, par basculement, à la position de travail à partir de leur position de repos.

2. Dispositif selon la revendication 1, **caractérisé par** la présence d'au moins deux trains d'entraînement (10) sans fin, dont les brins de charge (42) s'étendent parallèlement l'un à l'autre et prédéfinissent un plan de convoyage, en particulier un plan horizontal de convoyage avec les organes d'accouplement (58).

3. Dispositif selon la revendications 1 ou 2, **caractérisé par le fait qu'**au moins dans la région du brin de charge (42) du train d'entraînement (10) sans fin, les organes d'accouplement (58) s'étendent vers le haut, dans le sens vertical, au-delà dudit train d'entraînement (10) sans fin.

4. Dispositif selon l'une des revendications 1 à 3, **caractérisé par le fait que** les organes d'accouplement (58) sont réalisés sous la forme de tenons d'appui (58).

5. Dispositif selon l'une des revendications 1 à 4, **caractérisé par le fait que**, lors du fonctionnement dudit dispositif (2), l'axe de basculement (52, 54) des organes d'accouplement (58) s'étend horizontalement et perpendiculairement au sens de la rotation en boucle, le système de basculement (72) et le système de redressement (74) incluant des éléments de rails (76, 78 ; 82, 84, 86) par l'intermédiaire desquels lesdits organes d'accouplement (58) accomplissent le mouvement basculant avec guidage forcé.
